# FASCICULE DE BREVET EUROPEEN

(11) **EP 1 233 838 B1**
(45) Date de publication et mention de la délivrance du brevet: **04.06.2003**
(21) Numéro de dépôt: 00985348.2
(22) Date de dépôt: 28.11.2000
(51) Int. Cl.: B22D 5/00

(54) **BARRES METALLIQUES AISEMENT EMPILABLES OBTENUES PAR COULEE CONTINUE OU SEMI-CONTINUE**
DURCH STRANGGIESSEN ODER SEMIKONTINUIERLICHES GIESSEN ERZEUGTE LEICHT STAPELBARE METALLSTANGEN
EASILY STACKED METAL BARS OBTAINED BY CONTINUOUS OR SEMI-CONTINUOUS CASTING

(30) Priorité: 01.12.1999 FR 9915144
(43) Date de publication de la demande: 28.08.2002
(73) Titulaire: ALUMINIUM PECHINEY, 75218 Paris Cedex 16 (FR)
(72) Inventeur: LASLAZ, Gérard, F-38570 Le Cheylas (FR); HANTRAIS, Christian, F-38620 Massieu (FR); CARDINAL, Lionel, F-38380 Miribel-Les-Echelles (FR); GOLIARD, François, F-38690 Oyeu (FR); LARONZE, Daniel, F-60880 Jaux (FR)
(74) Mandataire: Mougeot, Jean-Claude
(86) Numéro de dépôt international: FR0003325
(87) Numéro de publication internationale: WO01039913

(56) Documents cités:
- FR-A- 1 219 197
- FR-A- 1 387 877
- GB-A- 896 523
- US-A- 2 119 112

## Description

### Domaine de l'invention

L'invention concerne les barres en alliage métallique, notamment en alliage d'aluminium, de forme parallélépipédique, obtenues par un procédé de coulée continue ou semi-continue, horizontale ou verticale, et destinées à être empilées en vue de leur stockage, de leur manutention et de leur transport.

### Etat de la technique

Les lingots de métal, notamment ceux utilisés en fonderie de moulage, sont traditionnellement obtenus par coulée dans des lingotières à fond fermé et présentent généralement une forme de tronc de pyramide pour faciliter le démoulage. Ces lingots sont livrés au fondeur en piles pour leur transport, leur manutention et leur introduction dans le four de fusion. Pour faciliter l'empilage des lingots, on a proposé de modifier leur géométrie, par exemple en prévoyant un système de tenon et mortaise, comme dans le brevet US 2,119,112 (Metal Handling 1936), ou les surfaces à superposer en prévoyant des dents, encoches, nervures ou tétons, comme dans les brevets FR 1219197 (Aluminium Laboratories 1959), GB 896523 (British Aluminium 1961) ou FR 1387877 (Pechiney 1963).

La technique de coulée en lingots est de plus en plus remplacée par la coulée continue ou semi-continue, horizontale ou verticale, qui améliore la productivité et conduit à des produits de meilleure qualité, en réduisant la quantité d'oxydes entraînés à la coulée, la retassure et les ségrégations internes. Elle conduit à des barres de forme pratiquement parallélépipédique, qui sont sciées à la volée, en sortie de ligne de coulée, à une longueur déterminée, généralement comprise entre 0,5 et 1m de long, de poids compris entre 3 et 20 kg, et livrées au client en piles.

Cependant, les piles réalisées à partir de ces barres présentent souvent un problème de stabilité mécanique. A cause de leur surface lisse, les barres glissent les unes sur les autres, même lorsqu'on pratique un croisement des nappes de barres, ou qu'on cercle les piles à l'aide de feuillard métallique ou de tresses en matière plastique. Ce glissement peut entraîner la chute de barres hors de la pile, ce qui peut être dangereux pour le personnel, et rend problématique la manutention et le transport. Pour y remédier, on a proposé de ceinturer la pile à l'aide d'un grillage métallique ou d'un emballage plastifié, mais ces solutions sont d'un coût élevé et conduisent à des complications supplémentaires pour le client.

Le but de la présente invention est de procurer un moyen simple et efficace pour assurer la stabilité des piles de barres métalliques issues de coulée continue ou semi-continue.

### Objet de l'invention

L'invention a pour objet des barres métalliques de forme parallélépipédique obtenues par coulée continue ou semi-continue et destinées à être empilées, comportant, sur l'une au moins des arêtes de coupe qui seront horizontales dans la pile, ou à proximité de cette arête, au moins une protubérance de hauteur comprise entre 0,5 et 8 mm. Ces protubérances peuvent être réalisées sans ajout de métal, par déformation plastique de l'arête de la barre, par exemple par repoussage à froid, par pressage à froid ou par choc. Elles peuvent également être obtenues par apport de métal, par exemple par dépôt d'une gouttelette ou d'un cordon de métal au bord de l'arête par une technique analogue au soudage avec métal d'apport, ou par soudo-brasage d'un goujon.

### Description des figures

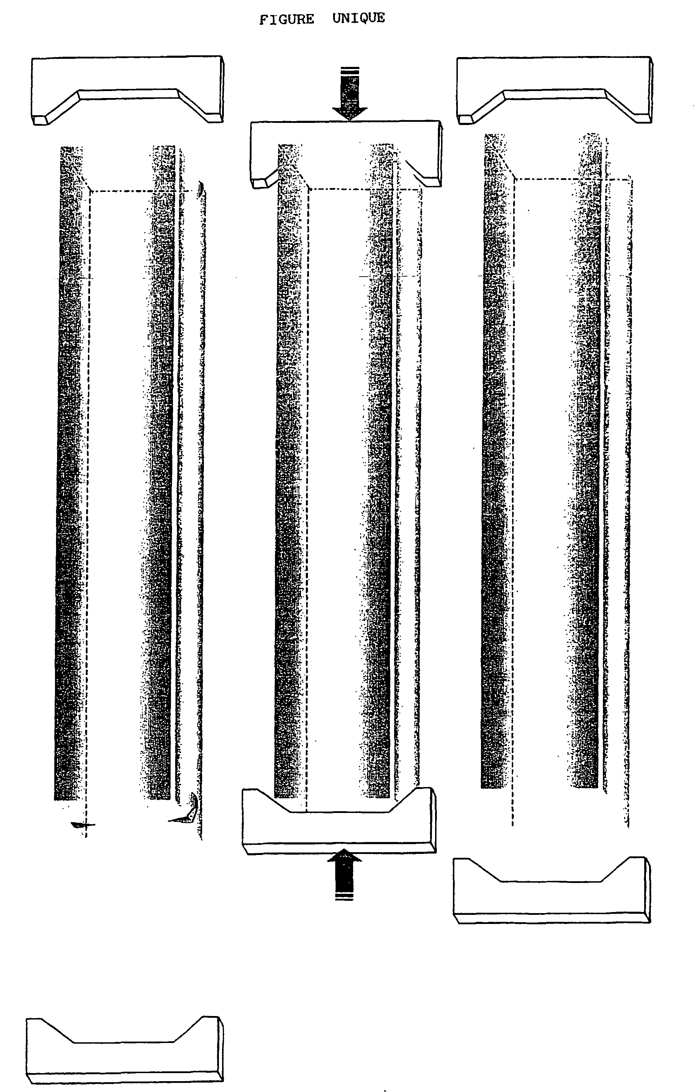

La figure unique représente schématiquement une opération de repoussage à froid pour obtenir des barres selon l'invention.

### Description de l'invention

L'invention repose sur la constatation qu'une simple protubérance de quelques millimètres d'épaisseur, située sur une arête horizontale des barres ou à proximité (typiquement à une distance inférieure à 10% de la longueur de la barre), suffisait à assurer la stabilité de la pile de barres. De plus, la réalisation de telles protubérances peut être intégrée dans la partie aval avant empilage de l'installation de coulée continue, de manière à être automatisée, sans modifier l'outil d'empilage. L'opération peut se faire également en sortie d'installation sur les piles déjà constituées, puisque les extrémités des barres restent accessibles.

La hauteur de la protubérance est comprise entre 0,5 et 8 mm. Elle peut être d'autant plus faible que la coulée permet de respecter des tolérances dimensionnelles serrées pour les sections des barres, ainsi qu'une bonne planéité. La forme de la protubérance n'a pas une grande importance, ce qui autorise des modes de réalisation variés.

Un premier mode de réalisation consiste à obtenir la protubérance par une déformation mécanique de l'arête, par exemple par un choc créant une encoche, le métal enlevé dans l'encoche créant la protubérance, ou par un usinage à grande vitesse à l'aide d'une fraise.

La déformation peut se faire également par repoussage du métal à partir de l'arête à l'aide d'un outil. Le fait qu'on opère sur une arête fait que ce type de déformation demande moins d'énergie, ce qui facilite l'automatisation de l'opération. Cette automatisation peut se faire, par exemple, à l'aide d'une pince qui enserre la barre après sciage, de manière à l'immobiliser pour faire agir l'outil de frappe, d'usinage ou de repoussage. Un exemple de dispositif de repoussage est illustré à la figure unique, les barres représentées étant horizontales. Il est constitué de deux outils symétriques présentant une forme trapézoïdale en creux, qui viennent enserrer simultanément les deux extrémités de la barre, en créant une encoche sur les arêtes supérieure et inférieure des faces verticales d'extrémité, et une protubérance sur les faces horizontales supérieure et inférieure de la barre, tout près de l'arête. Un résultat satisfaisant a été obtenu avec des forces de pressage modérées, de l'ordre de 2,5 t pour de l'aluminium A5 et de 6,5 t pour un alliage A-S7G0,6 à 7% de silicium et 0,6% de magnésium.

Un second mode de réalisation de la protubérance consiste à utiliser un fil de soudure, de préférence du même alliage que l'alliage coulé, ou en tout cas d'un alliage compatible avec l'utilisation finale, pour déposer au bord de l'arête ou parallèlement à l'arête et à faible distance de celle-ci, soit une ou plusieurs gouttelettes, soit un cordon continu. L'automatisation de l'opération peut se faire à l'aide d'un robot de soudage MIG du type de ceux utilisés dans les chaînes de production de pièces soudées..

Un troisième mode de réalisation consiste à implanter un goujon de la hauteur désirée, par un dispositif de soudo-brasage, par exemple du type à décharge de condensateur, lui aussi aisément automatisable.

Les barres selon l'invention permettent de former des piles autobloquantes stables avec un simple cerclage, sans qu'il soit nécessaire de les emballer dans un film plastique. Ces piles sont réalisées, de préférence, en nappes croisées, c'est-à-dire que les longueurs des barres sont alternativement perpendiculaires, la longueur des barres étant proche d'un multiple de leur largeur, de manière à obtenir une pile assez compacte. Dans le cas où les protubérances ne sont pas directement sur l'arête, mais à proximité de celle-ci à une distance d, il est souhaitable que la différence entre la longueur de la barre et le multiple de la largeur immédiatement inférieur soit légèrement supérieure à la distance d entre la protubérance et l'arête pour obtenir l'effet de blocage désiré ; ceci conduit à une pile en « hérisson », c'est-à-dire une pile dans laquelle les barres d'une nappe dépassent sur deux faces latérales par rapport à la nappe inférieure ou supérieure, et sont en retrait sur les deux autres faces.

## Revendications

1. Barre métallique de forme parallélépipédique, obtenue par coulée continue ou semi-continue, et destinée à être empilée, **caractérisée en ce qu'**elle comporte, sur l'une au moins des arêtes de coupe horizontales dans la pile, ou à proximité de celle-ci, au moins une protubérance de hauteur comprise entre 0,5 et 8 mm.

2. Barre selon la revendication 1, **caractérisée en ce que** la protubérance est obtenue par déformation plastique de l'arête de la barre.

3. Barre selon la revendication 2, **caractérisée en ce que** la protubérance est obtenue par repoussage à froid

4. Barre selon la revendication 2, **caractérisée en ce que** la protubérance est obtenue par pressage à froid

5. Barre selon la revendication 2, **caractérisée en ce que** la protubérance est obtenue par usinage ou par choc.

6. Barre selon la revendication 1, **caractérisée en ce que** la protubérance est obtenue par dépôt d'une gouttelette ou d'un cordon métallique le long de l'arête ou parallèlement et à une faible distance de celle-ci.

7. Barre selon la revendication 1, **caractérisée en ce que** la protubérance est obtenue par soudo-brasage d'un goujon au bord de l'arête.

8. Pile réalisée avec des barres de longueur constante selon l'une des revendications 1 à 7.

9. Pile selon la revendication 8, **caractérisée en ce qu'**elle est réalisée en nappes croisées.

10. Pile selon la revendication 9, **caractérisée en ce que** les protubérances des barres sont réalisées à une distance d de l'arête, et que la différence entre la longueur des barres et le multiple de leur largeur immédiatement inférieur est égal ou légèrement supérieur à d.

## Patentansprüche

1. Durch Stranggießen oder halbkontinuierliches Gießen erzeugte und zum Stapeln bestimmte Metallstange in Parallelepipedform, **dadurch gekennzeichnet, dass** sie an mindestens einer der waagerechten Schnittkanten im Stapel oder in deren Nähe mindestens eine Ausstülpung von 0,5 bis 8 mm Höhe aufweist.

2. Stange nach Anspruch 1, **dadurch gekennzeichnet, dass** die Ausstülpung durch plastische Verformung der Stangenkante erzeugt wird.

3. Stange nach Anspruch 2, **dadurch gekennzeichnet, dass** die Ausstülpung durch Kaltprägen erzeugt wird.

4. Stange nach Anspruch 2, **dadurch gekennzeichnet, dass** die Ausstülpung durch Kaltpressen erzeugt wird.

5. Stange nach Anspruch 2, **dadurch gekennzeichnet, dass** die Ausstülpung durch Bearbeitung oder durch Schlageinwirkung erzeugt wird.

6. Stange nach Anspruch 1, **dadurch gekennzeichnet, dass** die Ausstülpung durch Aufbringen eines Metalltröpfchens oder eines Metallwulstes längs der Kante oder parallel und in geringen Abstand zu ihr erzeugt wird.

7. Stab nach Anspruch 1, **dadurch gekennzeichnet, dass** die Ausstülpung durch Schweißlöten eines Stiftes am Rand der Kante erzeugt wird.

8. Stapel, gebildet mit Stangen konstanter Länge nach einem der Ansprüche 1 bis 7.

9. Stapel nach Anspruch 8, **dadurch gekennzeichnet, dass** er kreuzschichtig ausgebildet ist.

10. Stapel nach Anspruch 9, **dadurch gekennzeichnet, dass** die Ausstülpungen der Stangen in einem Abstand d von der Kante ausgebildet sind und die Differenz zwischen der Länge der Stangen und dem Viellachen ihrer nächstkleineren Breite gleich oder geringfügig größer als d ist.

## Claims

1. Parallelepiped shape metallic bar obtained by continuous or semi-continuous casting and designed to be stacked, **characterized in that** it comprises at least one protuberance with a height of between 0.5 and 8 mm on or close to at least one of the horizontal cut edges in the stack.

2. Bar according to claim 1, **characterized in that** the protuberance is obtained by plastic deformation of the edge of the bar.

3. Bar according to claim 2, **characterized in that** the protuberance is obtained by cold pushing.

4. Bar according to claim 2, **characterized in that** the protuberance is obtained by cold pressing.

5. Bar according to claim 2, **characterized in that** the protuberance is obtained by machining or shock.

6. Bar according to claim 1, **characterized in that** the protuberance is obtained by deposition of a droplet or a metal strip along or parallel to the edge at a short distance from it;

7. Bar according to claim 1, **characterized in that** the protuberance is obtained by welding a stud at the end of the edge.

8. Stack made by using bars with a constant length according to one of claims 1 to 7.

9. Stack according to claim 8, **characterized in that** it is made using crossed layers.

10. Stack according to claim 9, **characterized in that** the protuberances of the bars are made at a distance d from the edge and that the difference between the length of the bars and the immediately lower multiple of their width is less than or equal to d.
